(19) Europäisches Patentamt
European Patent Office
Office européen des brevets

(11) **EP 4 047 582 A2**

(12) **EUROPEAN PATENT APPLICATION**

(43) Date of publication:
**24.08.2022 Bulletin 2022/34**

(51) International Patent Classification (IPC):
**G08G 1/01** (2006.01)    **G08G 1/042** (2006.01)
**G08G 1/08** (2006.01)

(21) Application number: **22179593.3**

(22) Date of filing: **17.06.2022**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.06.2021  CN 202110715782**

(71) Applicant: **Apollo Intelligent Connectivity (Beijing)
Technology Co., Ltd.
Beijing 100176 (CN)**

(72) Inventor: **Xu, Qiqi
Beijing, 100176 (CN)**

(74) Representative: **Hoffmann Eitle
Patent- und Rechtsanwälte PartmbB
Arabellastraße 30
81925 München (DE)**

(54) **METHOD AND APPARATUS OF GENERATING CONTROL SIGNAL FOR TRAFFIC LIGHT, ELECTRONIC DEVICE, AND MEDIUM**

(57)    The present disclosure provides a method and an apparatus of generating a control signal for a traffic light, a device, a medium, and a product, which relate to a field of intelligent transportation. The method of generating the control signal for the traffic light includes: determining, in response to receiving a plurality of traffic data sets from different data sources, a plurality of traffic congestion data corresponding to the plurality of traffic data sets respectively based on the plurality of traffic data sets; calculating fused traffic congestion data based on the plurality of traffic congestion data and weights respectively corresponding to the plurality of traffic congestion data; and generating, based on the fused traffic congestion data, a control signal for controlling the traffic light.

| In response to receiving a plurality of traffic data sets from different data sources, a plurality of traffic congestion data corresponding to the plurality of traffic data sets respectively are determined based on the plurality of traffic data sets | S210 |

| Fused traffic congestion data is calculated based on the plurality of traffic congestion data and weights respectively corresponding to the plurality of traffic congestion data | S220 |

| A control signal for controlling the traffic light is generated based on the fused traffic congestion data | S230 |

FIG. 2

EP 4 047 582 A2

**Description**

TECHNICAL FIELD

The present disclosure relates to a field of computer technology, in particular to a field of intelligent transportation, and more specifically to a method and an apparatus of generating a control signal for a traffic light, an electronic device, a medium, and a program product.

BACKGROUND

In a field of transportation, it is often necessary to control a traffic light, such as adjusting a green light duration of the traffic light, based on a traffic congestion, so as to improve the traffic congestion. However, in a related art, a control precision is poor and a control effect is not good in controlling the traffic light based on the traffic congestion.

SUMMARY

The present disclosure provides a method and an apparatus of generating a control signal for a traffic light, an electronic device, a storage medium, and a program product.

According to an aspect of the present disclosure, there is provided a method of generating a control signal for a traffic light, including: determining, in response to receiving a plurality of traffic data sets from different data sources, a plurality of traffic congestion data corresponding to the plurality of traffic data sets respectively based on the plurality of traffic data sets; calculating fused traffic congestion data based on the plurality of traffic congestion data and weights respectively corresponding to the plurality of traffic congestion data; and generating, based on the fused traffic congestion data, a control signal for controlling the traffic light.

According to another aspect of the present disclosure, there is provided an apparatus of generating a control signal for a traffic light, including: a determination module configured to determine, in response to receiving a plurality of traffic data sets from different data sources, a plurality of traffic congestion data corresponding to the plurality of traffic data sets respectively based on the plurality of traffic data sets; a calculation module configured to calculate fused traffic congestion data based on the plurality of traffic congestion data and weights respectively corresponding to the plurality of traffic congestion data; and a first generation module configured to generate, based on the fused traffic congestion data, a control signal for controlling the traffic light.

According to another aspect of the present disclosure, there is provided an electronic device, including: at least one processor; and a memory communicatively connected to the at least one processor, the memory stores instructions executable by the at least one processor, and the instructions, when executed by the at least one processor, allow the at least one processor to implement the method of generating the control signal for the traffic light described above.

According to another aspect of the present disclosure, there is provided a non-transitory computer-readable storage medium having computer instructions stored thereon, the computer instructions allow a computer to implement the method of generating the control signal for the traffic light described above.

According to yet another aspect of the present disclosure, there is provided a computer program product containing a computer program, the computer program, when executed by a processor, is allowed to implement the method of generating the control signal for the traffic light described above.

It should be understood that content described in this section is not intended to identify key or important features in the embodiments of the present disclosure, nor is it intended to limit the scope of the present disclosure. Other features of the present disclosure will be easily understood through the following description.

BRIEF DESCRIPTION OF THE DRAWINGS

The accompanying drawings are used to understand the solution better and do not constitute a limitation to the present disclosure.

FIG. 1 schematically shows an application scenario to which a method and an apparatus of generating a control signal for a traffic light may be applied according to an embodiment of the present disclosure.
FIG. 2 schematically shows a flowchart of a method of generating a control signal for a traffic light according to an embodiment of the present disclosure.
FIG. 3 schematically shows a schematic diagram of traffic flow directions according to an embodiment of the present disclosure.
FIG. 4 schematically shows a schematic diagram of generating a control signal for a traffic light according to an embodiment of the present disclosure.

FIG. 5 schematically shows a block diagram of an apparatus of generating a control signal for a traffic light according to an embodiment of the present disclosure.

FIG. 6 shows a block diagram of an electronic device for implementing a method of generating a control signal for a traffic light according to the embodiments of the present disclosure.

DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

The terms used herein are for the purpose of describing specific embodiments only and are not intended to limit the present disclosure. The terms "comprising", "including", and the like used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In a case of using the expression similar to "at least one of A, B and C", it should be explained according to the meaning of the expression generally understood by those skilled in the art (for example, "a system including at least one of A, B and C" should include but not be limited to a system including only A, a system including only B, a system including only C, a system including A and B, a system including A and C, a system including B and C, and/or a system including A, B and C).

The embodiments of the present disclosure provide a method of generating a control signal for a traffic light. The method of generating the control signal for the traffic light may include: determining, in response to receiving a plurality of traffic data sets from different data sources, a plurality of traffic congestion data corresponding to the plurality of traffic data sets respectively based on the plurality of traffic data sets; then calculating fused traffic congestion data based on the plurality of traffic congestion data and weights respectively corresponding to the plurality of traffic congestion data; and then generating, based on the fused traffic congestion data, a control signal for controlling the traffic light.

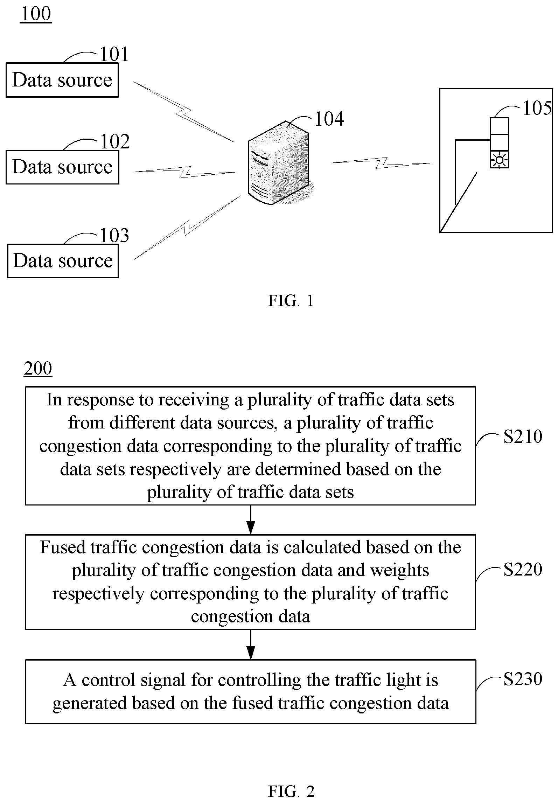

FIG. 1 schematically shows an application scenario to which a method and an apparatus of generating a control signal for a traffic light may be applied according to an embodiment of the present disclosure. It should be noted that FIG. 1 only shows an example of the application scenario to which the embodiments of the present disclosure may be applied so as to help those skilled in the art understand technical contents of the present disclosure. It does not mean that the embodiments of the present disclosure may not be used for other apparatuses, systems, environments or scenarios.

As shown in FIG. 1, an application scenario 100 according to the embodiment may include data sources 101, 102 and 103, an electronic device 104, and a traffic light 105.

The electronic device 104 may receive a plurality of traffic data sets from the data sources 101, 102 and 103, and data of each of the traffic data sets may come from, for example, one of the data sources. The electronic device 104 may calculate current traffic congestion data based on the plurality of traffic data sets, generate a control signal for controlling the traffic light 105 based on the traffic congestion data, and transmit the control signal to the traffic light 105 so as to control the traffic light 105. Controlling the traffic light 105 may include, for example, controlling a green light duration of the traffic light 105, a red light duration of the traffic light 105, and the like.

It should be noted that the method of generating the control signal for the traffic light provided by the embodiments of the present disclosure may be implemented by the electronic device 104. Accordingly, the apparatus of generating the control signal for the traffic light provided by the embodiments of the present disclosure may be arranged in the electronic device 104.

The embodiments of the present disclosure provide a method of generating a control signal for a traffic light. The method of generating the control signal for the traffic light according to an exemplary embodiment of the present disclosure is described below with reference to FIG. 2 to FIG. 4 in combination with the application scenario of FIG. 1.

FIG. 2 schematically shows a flowchart of a method of generating a control signal for a traffic light according to an embodiment of the present disclosure.

As shown in FIG. 2, a method 200 of generating a control signal for a traffic light according to the embodiment of the present disclosure may include, for example, operation S210 to operation S230.

In operation S210, in response to receiving a plurality of traffic data sets from different data sources, a plurality of traffic congestion data corresponding to the plurality of traffic data sets respectively are determined based on the plurality of traffic data sets.

In operation S220, fused traffic congestion data is calculated based on the plurality of traffic congestion data and weights respectively corresponding to the plurality of traffic congestion data.

In operation S230, a control signal for controlling the traffic light is generated based on the fused traffic congestion data.

Exemplarily, for a traffic data set from each data source, traffic congestion data is calculated based on the traffic data set, so that a plurality of traffic congestion data corresponding to the plurality of traffic data sets respectively are obtained. Then, fused traffic congestion data may be calculated based on the plurality of traffic congestion data and weights respectively corresponding to the plurality of traffic congestion data. Each traffic data set may correspond to a different weight. For example, different weights may be configured for different traffic data sets according to data accuracy of the data sources. The higher the data accuracy, the greater the weight. Since the fused traffic congestion data is obtained based on data from a plurality of data sources, the fused traffic congestion data may reflect a current traffic congestion relatively accurately.

After the fused traffic congestion data is calculated, a control signal for controlling the traffic light is generated based on the fused traffic congestion data. The control signal may control a green light duration or a red light duration of the traffic light. By controlling the traffic light, a congestion degree may be reduced according to the fused traffic congestion data, so as to improve the traffic congestion.

In the embodiments of the present disclosure, data from different data sources may include data from a traditional data acquisition device and Internet data. The data acquired by the traditional data acquisition device may be combined with the Internet data to determine the fused traffic congestion data, so that an accuracy of determining the traffic congestion may be improved, and a robustness of an algorithm used in a process of determining the traffic congestion may be improved.

In the embodiments of the present disclosure, the data sources may include, for example, a video acquisition device, a geomagnetic data acquisition device, and an electronic map. The video acquisition device and the geomagnetic data acquisition device may be, for example, traditional data acquisition devices, and data of the electronic map may be, for example, the Internet data. A calculation of traffic congestion data for each data source will be described below.

Exemplarily, taking the data source including a video acquisition device as an example, a traffic data set from the video acquisition device may include a length of time of a vehicle passing through an intersection.

A ratio of the length of time of the vehicle passing through the intersection to a length of time allowed for the vehicle to pass is determined as traffic congestion data corresponding to the traffic data set from the video acquisition device. The traffic congestion data may include a traffic saturation level. For example, a current green light duration is 50 seconds, and it is determined through a video acquisition that vehicles at an intersection pass through the intersection within 40 seconds. Then the traffic congestion data (traffic saturation level) may be, for example, 40/50=0.8. The greater the traffic saturation level, the more serious the congestion.

Exemplarily, taking the data source including a geomagnetic data acquisition device as an example, a traffic data set from the geomagnetic data acquisition device may include a number of vehicles passing through the intersection.

A ratio of the number of vehicles passing through the intersection to a reference number of vehicles may be determined as traffic congestion data corresponding to the traffic data set from the geomagnetic data acquisition device. The traffic congestion data may include a traffic saturation level. For example, the reference number of vehicles may be a number of vehicles passing within a green light duration in history. Taking 50 as an example of the reference number of vehicles, if a geomagnetic detection shows that a current number of vehicles passing through the intersection is 40, then the traffic congestion data (traffic saturation level) may be, for example, 40/50=0.8. The greater the traffic saturation level, the more serious the congestion.

Exemplarily, taking the data source including an electronic map as an example, a traffic data set from the electronic map may include driving track data of a vehicle.

Driving delay data of the vehicle may be determined as the traffic congestion data based on the driving track data of the vehicle. For example, an electronic device for implementing the method of the embodiments of the present disclosure may be in communication with the electronic map. The electronic device may receive driving track data of a vehicle (floating car track data) from the electronic map, and the driving delay data of the vehicle may be determined based on the driving track data of the vehicle. The driving delay data may include, for example, a length of time of the vehicle passing through the intersection, a length of queue of vehicles at the intersection, etc. The driving delay data may be determined as the traffic congestion data.

After the traffic congestion data (saturation level) for the video acquisition device, the traffic congestion data (saturation level) for the geomagnetic data acquisition device and the traffic congestion data (saturation level) for the electronic map are determined, the fused traffic congestion data may be calculated based on various saturation levels and corresponding weights. The fused traffic congestion data may be represented by, for example, a weighted saturation level DS.

$$DS = \beta_v\, DS_v + \beta_d\, DS_d + \beta_g\, DS_g \qquad \text{Equation (1)}$$

where $DS_v$ represents the traffic congestion data (saturation level) for the video acquisition device, $\beta_v$ represents the weight for the video acquisition device; $DS_d$ represents the traffic congestion data (saturation level) for the geomagnetic data acquisition device, $\beta_d$ represents the weight for the geomagnetic data acquisition device; $DS_g$ represents the traffic congestion data (saturation level) for the electronic map, $\beta_g$ represents the weight for the electronic map.

In the embodiments of the present disclosure, data from a plurality of data sources are combined to determine the fused traffic congestion data, so that an accuracy of determining the traffic congestion may be improved, and a robustness of an algorithm used in a process of determining the traffic congestion may be improved.

In addition, for any one of $DS_v$, $DS_d$ and $DS_g$, traffic congestion data (saturation level) for a plurality of historical time periods may be determined based on the corresponding traffic data set, and traffic congestion data for a current time period may be determined based on the traffic congestion data for the plurality of historical time periods and respective weights. A weight for each historical time period is associated with a time interval between the historical time period and the current time period.

Taking a calculation of $DS_v$ of the current time period for the video acquisition device as an example, the current time period may be, for example, a current green light duration. The plurality of historical time periods may be, for example, a green light duration in the past, and each cycle corresponds to a green light duration, that is, the plurality of historical time periods may be a plurality of historical cycles. Taking three historical time periods as an example, $DS_v$ of the current time period may be calculated, for example, based on $DS_v$ of the three historical time periods in the past and the respective weights. The weights for the three historical time periods may be, for example, 0.5, 0.3 and 0.2, respectively. The closer the historical time period is to the current time period, the greater the weight for the historical time period.

Similar to the calculation of $DS_v$ of the current time period, for $DS_d$ of a current time period for the geomagnetic data acquisition device, the current time period may be, for example, the current green light duration. The plurality of historical time periods may be, for example, a green light duration in the past, and each cycle corresponds to a green light duration, that is, the plurality of historical time periods may be a plurality of historical cycles. Taking three historical time periods as an example, $DS_d$ of the current time period may be calculated, for example, based on $DS_d$ of the three historical time periods in the past and the respective weights. The weights for the three historical time periods may be, for example, 0.5, 0.3 and 0.2, respectively. The closer the historical time period is to the current time period, the greater the weight for the historical time period.

For $DS_g$ of the current time period for the electronic map, taking three historical time periods as an example, each historical time period may be, for example, 5 minutes, and the three historical time periods may be, for example, the last three five minutes. $DS_g$ of the current time period may be calculated, for example, based on $DS_g$ of the three historical time periods in the past and the respective weights. The weights for the three historical time periods may be, for example, 0.5, 0.3 and 0.2, respectively. The closer the historical time period is to the current time period, the greater the weight for the historical time period. If a traffic flow is small when the historical time period is 5 minutes, the historical time period may be adjusted to 10 minutes.

In the embodiments of the present disclosure, the current traffic congestion data is calculated through the traffic congestion data (saturation level) in the historical time period, and the current congestion is determined by comprehensively considering recent data, which may improve an accuracy of the current traffic congestion data.

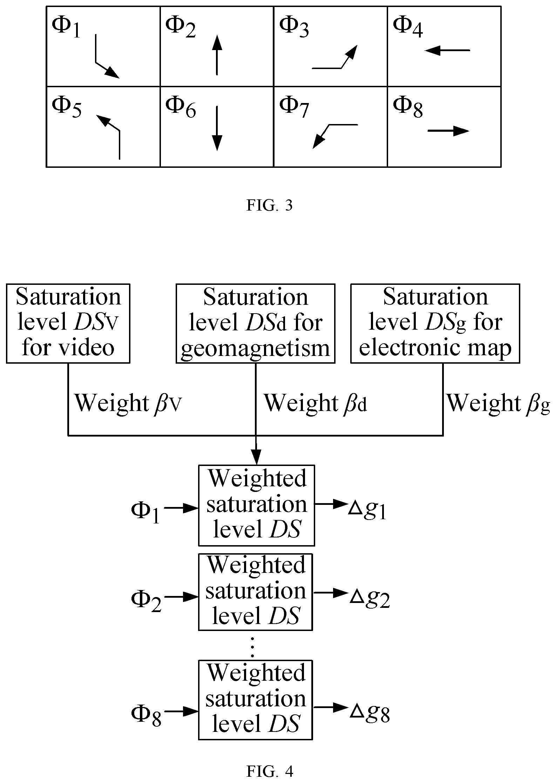

FIG. 3 schematically shows a schematic diagram of traffic flow directions according to an embodiment of the present disclosure.

As shown in FIG. 3, an intersection may include, for example, a plurality of traffic flow directions, such as eight traffic flow directions. A traffic flow direction may be called a phase $\Phi$. The eight traffic flow directions may be represented by, for example, $\Phi_1$ to $\Phi_8$.

Exemplarily, $DS_v$, $DS_d$ and $DS_g$ for each traffic flow direction may be calculated. The fused traffic congestion data of each traffic flow direction may be calculated using Equation (1), so as to obtain the fused traffic congestion data for the plurality of traffic flow directions.

Then, a congestion degree of each traffic flow direction in the plurality of traffic flow directions may be determined based on the fused traffic congestion data, and a first traffic flow direction with a congestion degree meeting a preset congestion condition may be determined from the plurality of traffic flow directions based on the congestion degree of each traffic flow direction. Traffic flow direction other than the first traffic flow direction is a second traffic flow direction. One or more most congested traffic flow directions in the plurality of traffic flow directions have the congestion degree meeting the preset congestion condition.

For the first traffic flow direction in the plurality of traffic flow directions, a control signal for a traffic light for the first traffic flow direction may be generated, so as to control the traffic light based on the control signal to reduce the congestion degree of the first traffic flow direction. Controlling the traffic light includes adjusting the green light duration of the traffic light, such as increasing the green light duration for the first traffic flow direction, so that more vehicles pass through the intersection via the first traffic flow direction to reduce the traffic congestion.

In addition, for the second traffic flow direction in the plurality of traffic flow directions, a control signal for a traffic light for the second traffic flow direction may be generated based on a restrictive condition. A congestion degree of the second traffic flow direction does not meet the preset congestion condition. The restrictive condition may include that an increase of the green light duration for the first traffic flow direction is equal to a decrease of the green light duration for the second traffic flow direction. For example, the green light duration for the second traffic flow direction may be reduced while increasing the green light duration for the first traffic flow direction.

According to the embodiments of the present disclosure, while adjusting the traffic light for the congested traffic flow direction, the traffic lights for other traffic flow directions are considered, so as to ensure a stability and a robustness of an overall system.

Exemplarily, an objective function for the plurality of traffic flow directions may be expressed as Equation (2).

$$\max: \quad L = \sum \Delta g_i \cdot w_i \cdot \beta_i \qquad \text{Equation (2)}$$

where $\Delta g_i$ represents a green light duration change amplitude of an i-th phase, for example, i= 1, 2, 3,..., 8; $w_i$ represents a weight for an i-th traffic flow direction, 1 is a default of $w_i$. In some embodiments, a weight for a traffic flow direction of a main road may be greater than that for a traffic flow direction of a non-main road. For a supersaturated phase, $\beta \in$ [1,1.5], and for a non-supersaturated phase, $\beta = 1$. The supersaturated phase indicates a phase (traffic flow direction) with a large traffic congestion degree, such as a traffic flow direction with a large weighted saturation level *DS*. The non-supersaturated phase indicates a phase (traffic flow direction) with a small traffic congestion degree, such as a traffic flow direction with a small weighted saturation level *DS*. The embodiments of the present disclosure may be implemented to adjust a value of $\Delta g_i$ when the objective function meets a certain condition.

The value of $\Delta g_i$ is shown in Equation (3).

$$\begin{cases} \Delta g_i \in [0, \Delta t_i] \,, \text{Supersaturated} \\ \qquad \Delta g_i = 0 \,, \text{No data} \qquad \qquad \text{Equation (3)} \\ \Delta g_i \in [-\Delta t_i, \Delta t_i] \,, \text{Unsaturated} \end{cases}$$

$$\Delta t_i = f(g_i) \qquad \qquad \text{Equation (4)}$$

where $\Delta t_i$ represents a maximum change amplitude of the i-th phase, such as 20%. Equation (4) shows that different phases (traffic flow directions) may have different maximum change amplitudes. When a weighted saturation level for a traffic flow direction (phase) is supersaturated, $\Delta g_i \in [0, \Delta t_i]$. When a weighted saturation level for a traffic flow direction (phase) is saturated or unknown (no data), $\Delta g_i = 0$. When a weighted saturation level for a traffic flow direction (phase) is unsaturated, $\Delta g_i \in [-\Delta t_i, \Delta t_i]$.

The embodiments of the present disclosure are implemented to mainly adjust the green light duration for the supersaturated phase (the first traffic flow direction), and the green light duration for the unsaturated phase (the second traffic flow direction) may be adjusted accordingly under a constraint condition (restrictive condition). The constraint condition (restrictive condition) may be expressed as, for example, Equation (5).

$$\begin{cases} \Delta g_1 + \Delta g_2 = \Delta g_5 + \Delta g_6 \\ \Delta g_3 + \Delta g_4 = \Delta g_7 + \Delta g_8 \\ \qquad \Sigma_{i=1}^4 \Delta g_i = 0 \\ \qquad \Sigma_{i=5}^8 \Delta g_i = 0 \end{cases} \qquad \text{Equation (5)}$$

where $\Delta g_1 + \Delta g_2 = \Delta g_5 + \Delta g_6$ indicates that a sum of the green light duration change amplitudes of the first and second phases is equal to a sum of the green light duration change amplitudes of the fifth and sixth phases; $g_3 + \Delta g_4 = \Delta g_7 + \Delta g_8$ indicates that a sum of the green light duration change amplitudes of the third and fourth phases is equal to a sum of the green light duration change amplitudes of the seventh and eighth phases; $\Sigma_{i=1}^4 \Delta g_i = 0$ indicates that a sum of the green light duration change amplitudes of the first to fourth phases is equal to 0; $\sum_{i=5}^{8} \Delta g_i = 0$ indicates that a sum of the green light duration change amplitudes of the fifth to eighth phases is equal to 0.

FIG. 4 schematically shows a schematic diagram of generating a control signal for a traffic light according to an embodiment of the present disclosure.

As shown in FIG. 4, the saturation level $DS_v$ (traffic congestion data) for the video acquisition device is calculated based on the traffic data set for the video acquisition device, and the current saturation level $DS_v$ may be calculated based on the saturation level $DS_v$ of a plurality of historical time periods and corresponding weights. Similarly, the saturation level $DS_d$ (traffic congestion data) for the geomagnetic data acquisition device may be calculated based on the traffic data set for the geomagnetic data acquisition device. The saturation level $DS_g$ (traffic congestion data) for the electronic map may be calculated based on the traffic data set for the electronic map.

The saturation levels $DS_v$, $DS_d$ and $DS_g$ correspond to weights $\beta_v$, $\beta_d$ and $\beta_g$, respectively. After the saturation levels $DS_v$, $DS_d$ and $DS_g$ are calculated, the weighted saturation level DS (fused traffic congestion data) may be calculated based on various saturation levels and the corresponding weights. After the weighted saturation level for the plurality of traffic flow directions (phases) $\Phi 1$ to $\Phi 8$ are obtained, the green light duration change amplitude $\Delta g_i$ of the traffic flow direction may be adjusted. For example, the green light duration for the first traffic flow direction may be increased while decreasing the green light duration for the second traffic flow direction.

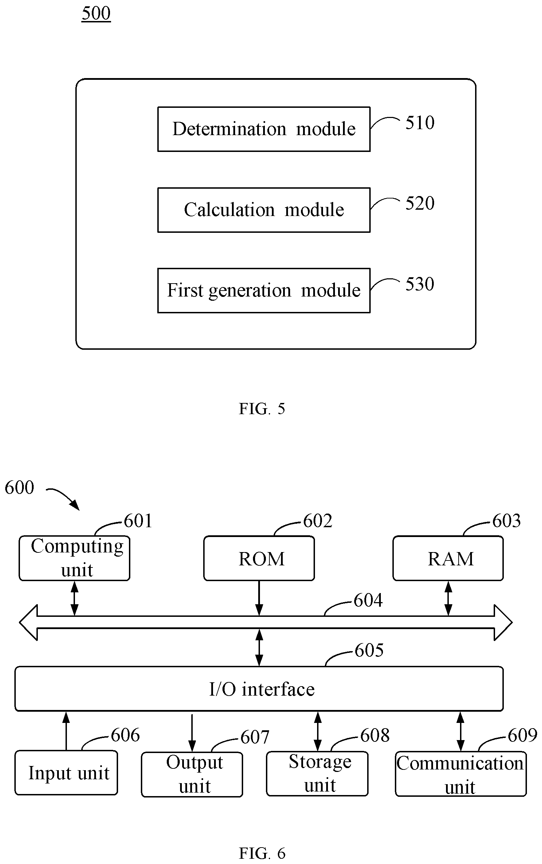

FIG. 5 schematically shows a block diagram of an apparatus of generating a control signal for a traffic light according to an embodiment of the present disclosure.

As shown in FIG. 5, an apparatus 500 of generating a control signal for a traffic light according to the embodiment of the present disclosure may include, for example, a determination module 510, a calculation module 520, and a first generation module 530.

The determination module 510 may be used to determine, in response to receiving a plurality of traffic data sets from different data sources, a plurality of traffic congestion data corresponding to the plurality of traffic data sets respectively based on the plurality of traffic data sets. According to the embodiments of the present disclosure, the determination module 510 may perform, for example, the operation S210 described above with reference to FIG. 2, which will not repeated here.

The calculation module 520 may be used to calculate fused traffic congestion data based on the plurality of traffic congestion data and weights respectively corresponding to the plurality of traffic congestion data. According to the embodiments of the present disclosure, the calculation module 520 may perform, for example, the operation S220 described above with reference to FIG. 2, which will not repeated here.

The first generation module 530 may be used to generate a control signal for controlling the traffic light based on the fused traffic congestion data. According to the embodiments of the present disclosure, the first generation module 530 may perform, for example, the operation S230 described above with reference to FIG. 2, which will not be repeated here.

According to the embodiments of the present disclosure, the data source may include a video acquisition device, and the traffic data set from the video acquisition device may include a length of time of a vehicle passing through an intersection. The determination module may be further used to, for the traffic data set from the video acquisition device, determine a ratio of the length of time of the vehicle passing through the intersection to a length of time allowed for the vehicle to pass as traffic congestion data corresponding to the traffic data set from the video acquisition device.

According to the embodiments of the present disclosure, the data source may include a geomagnetic data acquisition device, and a traffic data set from the geomagnetic data acquisition device may include a number of vehicles passing through an intersection. The determination module may be further used to, for the traffic data set from the geomagnetic data acquisition device, determine a ratio of the number of vehicles passing through the intersection to a reference number of vehicles as the traffic congestion data corresponding to the traffic data set from the geomagnetic data acquisition device.

According to the embodiments of the present disclosure, the data source may include an electronic map, and a traffic data set from the electronic map may include driving track data of a vehicle. The determination module may be further used to, for the traffic data set from the electronic map, determine the driving delay data of the vehicle as the traffic congestion data based on the driving track data of the vehicle.

According to the embodiments of the present disclosure, the fused traffic congestion data may include data for a plurality of traffic flow directions. The first generation module 530 may include a first determination sub-module and a generation sub-module. The first determination sub-module is used to determine a congestion degree of each of the plurality of traffic flow directions based on the fused traffic congestion data. The generation sub-module is used to, for a first traffic flow direction in the plurality of traffic flow directions, generate a control signal for a traffic light for the first traffic flow direction, so as to control the traffic light based on the control signal to reduce a congestion degree of the first traffic flow direction. The congestion degree of the first traffic flow direction meets a preset congestion condition.

According to the embodiments of the present disclosure, the apparatus 500 may further include a second generation module used to, for a second traffic flow direction in the plurality of traffic flow directions, generate a control signal for a traffic light for the second traffic flow direction based on a restrictive condition. The congestion degree of the second traffic flow direction does not meet the preset congestion condition. Controlling the traffic light includes adjusting the green light duration of the traffic light, and the restrictive condition includes that the increase of the green light duration for the first traffic flow direction is equal to the decrease of the green light duration for the second traffic flow direction.

According to the embodiments of the present disclosure, for each traffic data set, the determination module 510 includes a second determination sub-module and a third determination sub-module. The second determination sub-module is used to determine traffic congestion data for a plurality of historical time periods based on the traffic data set. The third determination sub-module is used to determine traffic congestion data for the current time period based on the traffic congestion data for the plurality of historical time periods and corresponding weights. A weight corresponding to each historical time period is associated with a time interval between the historical time period and the current time period.

In the technical solution of the present disclosure, the collection, storage, use, processing, transmission, provision, disclosure, and application of the user's personal information involved are all in compliance with relevant laws and regulations, take essential confidentiality measures, and do not violate public order and good customs.

In the technical solution of the present disclosure, authorization or consent is obtained from the user before the user's personal information is obtained or collected.

According to the embodiments of the present disclosure, the present disclosure further provides an electronic device, a readable storage medium, and a computer program product.

FIG. 6 shows a block diagram of an electronic device for implementing the method of generating the control signal for the traffic light according to the embodiments of the present disclosure.

FIG. 6 shows a schematic block diagram of an exemplary electronic device 600 for implementing the embodiments of the present disclosure. The electronic device 600 is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 may include a computing unit 601, which may perform various appropriate actions and processing based on a computer program stored in a read-only memory (ROM) 602 or a computer program loaded from a storage unit 608 into a random access memory (RAM) 603. Various programs and data required for the operation of the electronic device 600 may be stored in the RAM 603. The computing unit 601, the ROM 602 and the RAM 603 are connected to each other through a bus 604. An input/output (I/O) interface 605 is further connected to the bus 604.

Various components in the electronic device 600, including an input unit 606 such as a keyboard, a mouse, etc., an output unit 607 such as various types of displays, speakers, etc., a storage unit 608 such as a magnetic disk, an optical disk, etc., and a communication unit 609 such as a network card, a modem, a wireless communication transceiver, etc., are connected to the I/O interface 605. The communication unit 609 allows the electronic device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 601 may perform the various methods and processes described above, such as the method of generating the control signal for the traffic light. For example, in some embodiments, the method of generating the control signal for the traffic light may be implemented as a computer software program that is tangibly contained on a machine-readable medium, such as a storage unit 608. In some embodiments, part or all of a computer program may be loaded and/or installed on the electronic device 600 via the ROM 602 and/or the communication unit 609. When the computer program is loaded into the RAM 603 and executed by the computing unit 601, one or more steps of the method of generating the control signal for the traffic light described above may be performed. Alternatively, in other embodiments, the computing unit 601 may be configured to perform the method of generating the control signal for the traffic light in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A method (200) of generating a control signal for a traffic light (105), comprising:

    determining (S210), in response to receiving a plurality of traffic data sets from different data sources (101, 102, 103), a plurality of traffic congestion data ($DS_v$, $DS_d$, $DS_g$) corresponding to the plurality of traffic data sets respectively based on the plurality of traffic data sets;

calculating (S220) fused traffic congestion data (DS) based on the plurality of traffic congestion data ($DS_v$, $DS_d$, $DS_g$) and weights ($\beta_V$, $\beta_d$, $\beta_g$) respectively corresponding to the plurality of traffic congestion data; and
generating (S230), based on the fused traffic congestion data (DS), a control signal for controlling the traffic light (105).

**2.** The method (200) according to claim 1, wherein the data source (101, 102, 103) comprises a video acquisition device, and a traffic data set from the video acquisition device comprises a length of time of a vehicle passing through an intersection; and

wherein the determining a plurality of traffic congestion data ($DS_v$, $DS_d$, $DS_g$) corresponding to the plurality of traffic data sets respectively based on the plurality of traffic data sets comprises: for the traffic data set from the video acquisition device,
determining a ratio of the length of time of the vehicle passing through the intersection to a length of time allowed for the vehicle to pass as traffic congestion data ($DS_v$) corresponding to the traffic data set from the video acquisition device.

**3.** The method (200) according to any preceding claim, wherein the data source (101, 102, 103) comprises a geomagnetic data acquisition device, and a traffic data set from the geomagnetic data acquisition device comprises a number of vehicles passing through an intersection; and

wherein the determining a plurality of traffic congestion data ($DS_v$, $DS_d$, $DS_g$) corresponding to the plurality of traffic data sets respectively based on the plurality of traffic data sets comprises: for the traffic data set from the geomagnetic data acquisition device,
determining a ratio of the number of vehicles passing through the intersection to a reference number of vehicles as traffic congestion data ($DS_d$) corresponding to the traffic data set from the geomagnetic data acquisition device.

**4.** The method (200) according to any preceding claim, wherein the data source (101, 102, 103) comprises an electronic map, and a traffic data set from the electronic map comprises driving track data of a vehicle; and

wherein the determining a plurality of traffic congestion data ($DS_v$, $DS_d$, $DS_g$) corresponding to the plurality of traffic data sets respectively based on the plurality of traffic data sets comprises: for the traffic data set from the electronic map,
determining driving delay data of a vehicle as the traffic congestion data (DSg) based on the driving track data of the vehicle.

**5.** The method (200) according to any preceding claim, wherein the fused traffic congestion data (DS) comprises data for a plurality of traffic flow directions ($\Phi_1$ to $\Phi_8$); the generating, based on the fused traffic congestion data (DS), a control signal for controlling the traffic light (105) comprises:

determining a congestion degree of each of the plurality of traffic flow directions ($\Phi_1$ to $\Phi_8$) based on the fused traffic congestion data (DS); and
generating, for a first traffic flow direction in the plurality of traffic flow directions ($\Phi_1$ to $\Phi_8$), a control signal for a traffic light (105) for the first traffic flow direction, so as to control the traffic light (105) based on the control signal to reduce a congestion degree of the first traffic flow direction, wherein the congestion degree of the first traffic flow direction meets a preset congestion condition.

**6.** The method (200) according to claim 5, further comprising:

generating, for a second traffic flow direction in the plurality of traffic flow directions ($\Phi_1$ to $\Phi_8$), a control signal for a traffic light (105) for the second traffic flow direction based on a restrictive condition, wherein a congestion degree of the second traffic flow direction does not meet the preset congestion condition,
wherein the controlling the traffic light (105) comprises adjusting a green light duration of the traffic light (105), and the restrictive condition comprises that an increase of the green light duration for the first traffic flow direction is equal to a decrease of the green light duration for the second traffic flow direction.

**7.** The method (200) according to any preceding claim, wherein the determining a plurality of traffic congestion data ($DS_v$, $DS_d$, $DS_g$) corresponding to the plurality of traffic data sets respectively based on the plurality of traffic data sets comprises: for each of the plurality of traffic data sets,

determining traffic congestion data for a plurality of historical time periods based on the traffic data set; and determining traffic congestion data for a current time period based on the traffic congestion data for the plurality of historical time periods and weights respectively corresponding to the traffic congestion data for the plurality of historical time periods,

wherein a weight corresponding to each historical time period is associated with a time interval between the historical time period and the current time period.

8. An apparatus (500) of generating a control signal for a traffic light, comprising:

a determination module (510) configured to determine, in response to receiving a plurality of traffic data sets from different data sources, a plurality of traffic congestion data corresponding to the plurality of traffic data sets respectively based on the plurality of traffic data sets;
a calculation module (520) configured to calculate fused traffic congestion data based on the plurality of traffic congestion data and weights respectively corresponding to the plurality of traffic congestion data; and
a first generation module (530) configured to generate, based on the fused traffic congestion data, a control signal for controlling the traffic light.

9. The apparatus (500) according to claim 8, wherein the data source comprises a video acquisition device, and a traffic data set from the video acquisition device comprises a length of time of a vehicle passing through an intersection; and

wherein the determination module (510) is further configured to: for the traffic data set from the video acquisition device,
determine a ratio of the length of time of the vehicle passing through the intersection to a length of time allowed for the vehicle to pass as traffic congestion data corresponding to the traffic data set from the video acquisition device.

10. The apparatus (500) according to claim 8 or 9, wherein the data source comprises a geomagnetic data acquisition device, and a traffic data set from the geomagnetic data acquisition device comprises a number of vehicles passing through an intersection; and

wherein the determination module (510) is further configured to: for the traffic data set from the geomagnetic data acquisition device,
determine a ratio of the number of vehicles passing through the intersection to a reference number of vehicles as traffic congestion data corresponding to the traffic data set from the geomagnetic data acquisition device.

11. The apparatus (500) according to any one of claims 8 to 10, wherein the data source comprises an electronic map, and a traffic data set from the electronic map comprises driving track data of a vehicle; and

wherein the determination module (510) is further configured to: for the traffic data set from the electronic map,
determine driving delay data of a vehicle as the traffic congestion data based on the driving track data of the vehicle.

12. The apparatus (500) according to any one of claims 8 to 10,

wherein the determination module (510) comprises: for each of the plurality of traffic data sets,
a second determination sub-module configured to determine traffic congestion data for a plurality of historical time periods based on the traffic data set; and
a third determination sub-module configured to determine traffic congestion data for a current time period based on the traffic congestion data for the plurality of historical time periods and weights respectively corresponding to the traffic congestion data for the plurality of historical time periods,
wherein a weight corresponding to each historical time period is associated with a time interval between the historical time period and the current time period,
wherein the fused traffic congestion data comprises data for a plurality of traffic flow directions; the first generation module (530) comprises:

a first determination sub-module configured to determine a congestion degree of each of the plurality of traffic flow directions based on the fused traffic congestion data; and

a generation sub-module configured to generate, for a first traffic flow direction in the plurality of traffic flow directions, a control signal for a traffic light for the first traffic flow direction, so as to control the traffic light based on the control signal to reduce a congestion degree of the first traffic flow direction, wherein the congestion degree of the first traffic flow direction meets a preset congestion condition, and

the apparatus (500) further comprises:

a second generation module configured to generate, for a second traffic flow direction in the plurality of traffic flow directions, a control signal for a traffic light for the second traffic flow direction based on a restrictive condition, wherein a congestion degree of the second traffic flow direction does not meet the preset congestion condition,
wherein controlling the traffic light comprises adjusting a green light duration of the traffic light, and the restrictive condition comprises that an increase of the green light duration for the first traffic flow direction is equal to a decrease of the green light duration for the second traffic flow direction.

13. An electronic device, comprising:

at least one processor; and
a memory communicatively connected to the at least one processor, wherein the memory stores instructions executable by the at least one processor, and the instructions, when executed by the at least one processor, allow the at least one processor to implement the method of any one of claims 1 to 7.

14. A non-transitory computer-readable storage medium having computer instructions stored thereon, wherein the computer instructions allow a computer to implement the method of any one of claims 1 to 7.

15. A computer program product containing a computer program, wherein the computer program, when executed by a processor, is allowed to implement the method of any one of claims 1 to 7.

100

101
Data source

102
Data source

104

105

103
Data source

FIG. 1

200

| In response to receiving a plurality of traffic data sets from different data sources, a plurality of traffic congestion data corresponding to the plurality of traffic data sets respectively are determined based on the plurality of traffic data sets | S210 |

| Fused traffic congestion data is calculated based on the plurality of traffic congestion data and weights respectively corresponding to the plurality of traffic congestion data | S220 |

| A control signal for controlling the traffic light is generated based on the fused traffic congestion data | S230 |

FIG. 2

| $\Phi_1$ | $\Phi_2$ | $\Phi_3$ | $\Phi_4$ |
|---|---|---|---|
| $\Phi_5$ | $\Phi_6$ | $\Phi_7$ | $\Phi_8$ |

FIG. 3

| Saturation level $DS_v$ for video | Saturation level $DS_d$ for geomagnetism | Saturation level $DS_g$ for electronic map |
|---|---|---|

Weight $\beta_v$   Weight $\beta_d$   Weight $\beta_g$

$\Phi_1 \rightarrow$ Weighted saturation level $DS$ $\rightarrow \Delta g_1$

$\Phi_2 \rightarrow$ Weighted saturation level $DS$ $\rightarrow \Delta g_2$

$\vdots$

$\Phi_8 \rightarrow$ Weighted saturation level $DS$ $\rightarrow \Delta g_8$

FIG. 4

500

Determination module — 510

Calculation module — 520

First generation module — 530

FIG. 5

600

Computing unit — 601

ROM — 602

RAM — 603

— 604

— 605

I/O interface

Input unit — 606

Output unit — 607

Storage unit — 608

Communication unit — 609

FIG. 6